# DEMANDE DE BREVET EUROPEEN

(11) **EP 2 933 792 A1**
(43) Date de publication de la demande: **21.10.2015**
(21) Numéro de dépôt: 14165136.4
(22) Date de dépôt: 17.04.2014
(51) Int. Cl.: G09B 7/02, G09B 19/00

(54) **Équipement et procédé pour l'apprentissage d'un groupe d'individus et les répartir en sous-groupes**

(71) Demandeur: Bernard Julhiet Services, 92200 Neuilly-sur-Seine (FR)
(72) Inventeur: Thibault, Alain, 92200 Neuilly- sur-Seine (FR); Christmann, Denise, 92200 Neuilly-sur-Seine (FR); Grasset, Raphael, 92200 Neuilly-sur-Seine (FR)
(74) Mandataire: Bird Goën & Co

(57) **Abrégé**

L'équipement comprend une plate-forme (1) pour la détermination des profils (7) des individus, un terminal informatique (2) d'entrée de données caractéristiques des sous-groupes, un moteur d'apprenance (3) comportant un algorithme (6) pour fournir les sous-groupes (8) et les profils (7), des terminaux (4) d'entrée et d'échange de données pour les individus du groupe, pour l'établissement de leur profil (7), le terminal de sous-groupes (2) et les terminaux d'individus (4) étant connectés à la plate-forme (1), des moyens d'accès au réseau Internet (5), pour la connexion des terminaux (2, 4) et de la plate-forme (1).

## Description

L'invention concerne l'apprentissage des individus et, plus particulièrement, un équipement et un procédé pour, préalablement à l'apprentissage, répartir une masse d'individus en un certain nombre de groupes, afin d'adapter au mieux l'apprentissage des individus de la masse à chacun d'eux.

Un précepteur connait son élève et adapte sans difficulté son enseignement à la personnalité de celui-ci. L'apprentissage est adapté et, par définition, individualisé.

L'invention de la présente demande vise à procéder d'une manière similaire, mais pour une quantité importante d'individus. Un chiffre de plusieurs centaines est réaliste.

Atteindre pareil objectif n'est pas simple. Les individus n'ont pas tous les mêmes besoins, les mêmes niveaux, les mêmes profils d'apprenance.

L'apprenance est un néologisme qui exprime l'attitude écologique d'un individu envers l'acte d'apprendre. L'apprenance se caractérise à différents niveaux : individuel, collectif, organisationnel, interorganisationnel, sociétal, etc.

On propose aujourd'hui deux approches pour l'apprenance, une, psychologique, l'autre, informatique. L'invention concerne surtout la deuxième approche, mais sans négliger la première.

L'invention va maintenant être décrite en référence au dessin en annexe, sur lequel :
- la figure 1 représente un schéma-blocs de l'équipement de l'invention ;
- la figure 2 représente l'échelle psychométrique débouchant sur les profils des apprenants ;
- la figure 3 représente un schéma-blocs d'une variante de réalisation de la plate-forme de l'équipement de la figure 1 et
- la figure 4 représente l'organigramme de l'algorithme de répartition des individus.

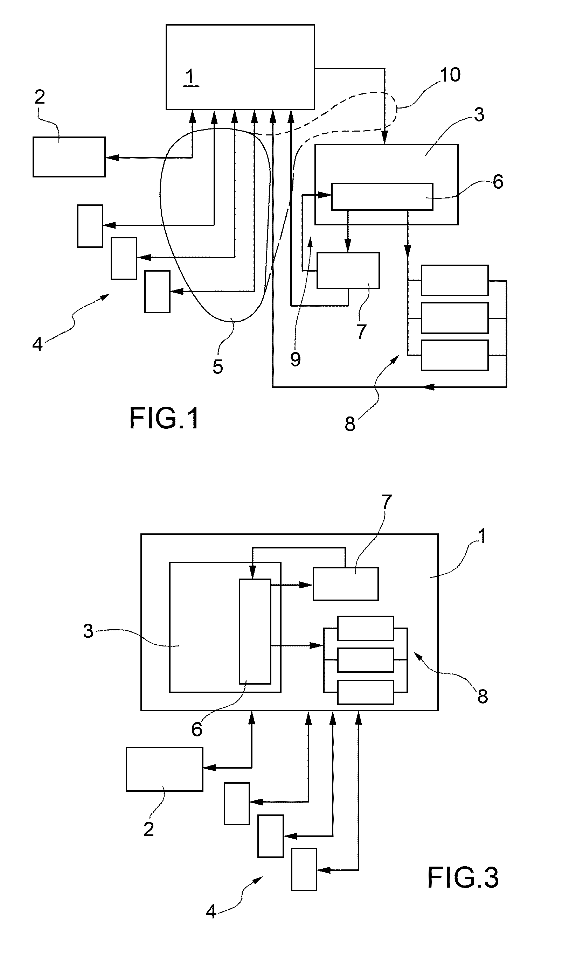

L'équipement de l'invention comporte, en référence à la figure 1 :
- une plate-forme 1 permettant la détermination des profils 7 des individus d'un groupe destinés à passer l'évaluation individuelle de leur diagnostic d'apprenance ;
- un terminal informatique 2 d'entrée de données caractéristiques de sous-groupes d'individus à former à partir du groupe ;
- un moteur d'apprenance 3, à travers lequel la plate-forme 1 permet la détermination des profils 7, comportant un algorithme 6 de répartition des individus du groupe, pour fournir en sortie du moteur 3 les sous-groupes 8 à former et les profils 7 des individus ;
- des terminaux 4 d'entrée et d'échange de données pour les individus du groupe, pour l'établissement de leur profil 7 ;
- le terminal de sous-groupes 2 et les terminaux d'individus 4 étant connectés à des entrées de la plate-forme 1 ;
- des moyens d'accès au réseau Internet 5, à travers lequel les connexions des terminaux 2, 4 et de la plate-forme 1 s'effectuent.

Les données caractérisant les sous-groupes attendus sont en fait des paramètres de l'algorithme 6.

La plate-forme 1 a essentiellement pour fonction d'être une interface entre les utilisateurs, c'est-à-dire les individus opérant les terminaux 4 et l'opérateur du terminal 2, d'une part, et le moteur d'apprenance 3, d'autre part.

Les connexions entre la plate-forme 1 et les terminaux 2 et 4 sont ici bidirectionnelles.

Étant en liaison avec la plate-forme 1, et donc avec les terminaux d'individus 4 et le terminal de sous-groupes 2, le moteur d'apprenance 3, par l'algorithme 6 et en boucle fermée (représentée par la flèche 9 sur la figure 1), génère en sortie les profils 7 et les sous-groupes 8.

Les profils 7 sont retransmis aux individus par la plate-forme 1 et les sous-groupes 8 sont retransmis à l'opérateur du terminal 2 par la plate-forme 1.

Les connexions du moteur d'apprenance 3 et de la plate-forme 1 pourraient, dans certains cas, également s'effectuer à travers le réseau Internet 5, comme illustré par l'extension en tirets 10.

Dans la forme de réalisation préférée de l'équipement, le moteur d'apprenance 3 est intégré à la plate-forme 1, comme représenté sur la figure 3. Le moteur d'apprenance 3, par l'algorithme 6, génère les profils 7 au sein de la plate-forme. Ces profils 7, traités par l'algorithme 6, lui permettent de générer en sortie les sous-groupes 8. Bien entendu, et toujours dans ce cas, les terminaux d'individus 4 et le terminal de sous-groupes 2 sont en liaison avec la plate-forme 1.

L'algorithme 6 est agencé pour opérer une suite de triages à partir des profils et d'au moins un facteur d'une échelle psychométrique ayant servi à établir les profils 7.

De préférence, il est procédé à un triage à partir de certaines des composantes de la dimension.

L'invention concerne également un procédé pour l'apprentissage d'un groupe d'individus afin de, préalablement à l'apprentissage, répartir les individus du groupe en sous-groupes d'individus à former, selon lequel :
- on saisit sur une plate-forme des données caractéristiques des sous-groupes ;
- les individus du groupe saisissent sur la plate-forme des données et en échangent d'autres avec elle, pour l'établissement de leurs profils ;
- on détermine les profils des individus ;
- on répartit les individus du groupe en sous-groupes à former en fonction de leurs profils.

De préférence, la saisie des données caractéristiques des sous-groupes s'effectue après la détermination des profils des individus.

De préférence encore, on détermine les profils à l'aide d'une échelle psychométrique et, pour répartir les individus en sous-groupes, on procède par triage à partir des profils et d'au moins un des facteurs de l'échelle psychométrique.

Avantageusement, les profils sont soumis à un triage à partir de certaines des composantes de ladite dimension.

Plus avantageusement encore, on crée de façon multifactorielle des grappes d'individus sur la base de composantes de dimensions de l'échelle psychométrique et on lance la création des sous-groupes après la création des grappes en définissant leur nombre et en répartissant les individus d'une même grappe de manière égale dans tous les sous-groupes, la répartition s'effectuant grappe après grappe.

Vont maintenant être développées les bases de l'équipement de l'invention en décrivant notamment l'échelle psychométrique, traitée par la plate-forme 1 et débouchant sur les profils 7, avant de présenter le procédé de répartition de la masse d'individus en groupes d'individus visant à les rendre proactifs.

### L'échelle psychométrique

I) L'échelle possède un certain nombre de « dimensions » qui vont être appliquées à chaque individu apprenant pour permettre de le caractériser. On peut en utiliser autant qu'on veut, mais on procèdera ici avec seulement cinq dimensions.
1 - L'acceptation par l'individu de la technologie pour apprendre, c'est-à-dire utilisée comme support d'apprentissage ;
2 - La manière pour l'individu de traiter l'information, c'est-à-dire sa logique cognitive ;
3 - Les freins et leviers motivationnels de l'individu, c'est-à-dire sa logique conative ;
4 - Le caractère socioaffectif de l'individu, qui traduit son acceptation d'apprendre conjointement à d'autres individus ;
5 - L'aptitude de l'individu à s'autoréguler, c'est-à-dire à gérer l'acquisition des connaissances.

II) Chacune des dimensions de l'échelle se décompose en « composantes » appelées « facteurs » et « construits ».

Si on considère par exemple la première dimension de l'acceptation de la technologie (techno-acceptation), son unique facteur (acceptation de la technologie) peut être décomposé en quatre « construits » :
a) la perception de l'utilité de la technologie ;
b) la perception de la facilité d'utilisation de la technologie ;
c) la perception de la flexibilité de la technologie;
d) l'attitude de l'individu en face de la technologie.

III) Chacun des construits induit des questions plus précises présentées de façon particulière, par un ensemble de notions exprimées sous forme d'affirmations, par rapport auxquelles l'individu se situe grâce à une échelle de Likert, très utilisée dans les questionnaires psychométriques. Les personnes interrogées doivent exprimer leur accord ou désaccord à l'égard d'une affirmation, selon un certain nombre de degrés, allant de l'accord parfait au désaccord total. Il y a généralement 4, 5 ou 7 choix de réponse.

On notera que dans le langage du métier, les notions sont appelées « items ».

Comme exemple d'affirmation liée au construit d), on peut proposer :
« *Les modalités de formation numérique attisent ma curiosité* ».

Réponses sur l'échelle de Likert : 1 (pas du tout d'accord), 2, 3, 4 (tout à fait d'accord).

À chaque notion, chaque construit, chaque facteur, on attribue donc une note de résultat, notes grâce auxquelles on détermine le profil de l'individu testé.

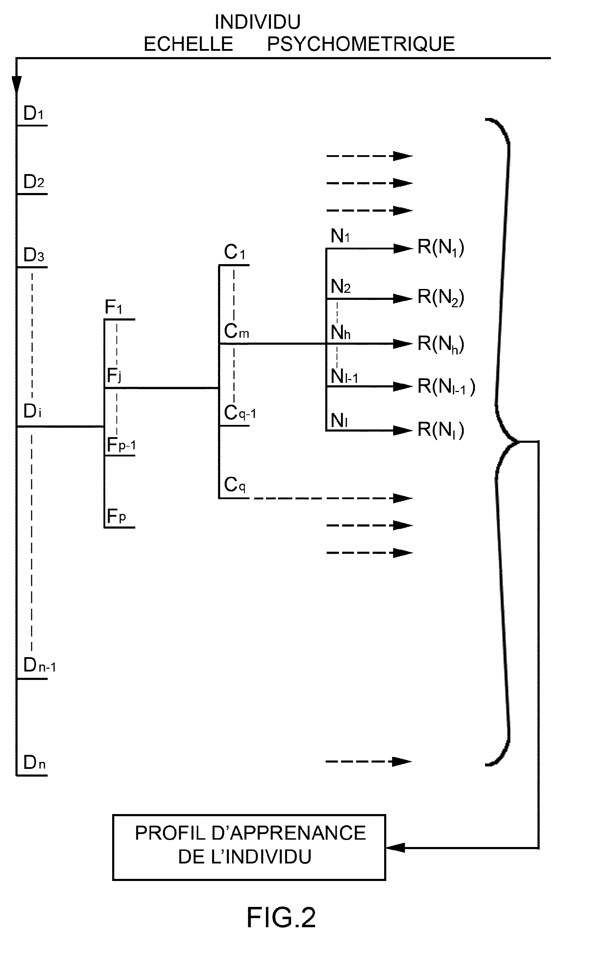

On aboutit ainsi au diagramme de la figure 2 de l'échelle psychométrique pour un individu déterminé.

On définit n dimensions D₁,...Dₙ, qu'on éclate en p facteurs F₁,...Fₚ, chacun éclaté en q construits C₁,...C_{q}, chacun de ces construits contenant l notions N₁,...Nₗ. Ces notions débouchent sur l'échelle de Likert sur des réponses R (Nₕ) qui s'échelonnent ici de 1 à 4. Les réponses R aux notions N constituent les notes de résultat de ces notions. Les notes de résultat combinées, c'est-à-dire l'ensemble des notes R pour h = 1 à l, m = 1 à q, j = 1 à p, de tous les facteurs F fournissent le profil d'apprenance de l'individu.

On remarquera que les nombres n, p, q, l ne sont pas immuables. À titre d'exemple, p peut-être égal à 4.

L'intégrale des profils d'individu 7 est associée à des modalités d'accompagnement et de formation ainsi qu'à des coefficients de pondération tenant compte des domaines d'apprentissage.

Comme modalités d'accompagnement, on peut faire référence à un mentor, un guide (coach), voire personne pour un individu considéré comme autonome.

Comme modalités de formation, on peut faire référence à une formation par conférence, par étude de cas,...

On a vu plus haut que l'algorithme 6 de répartition du groupe des individus en sous-groupes 8 s'appuyait sur au moins un des facteurs des profils des individus. On ajoutera ici que les sous-groupes 8 doivent avoir quelques caractéristiques prédéterminées, comme leur effectif souhaité, leur techno-acceptation, par exemple.

Les sous-groupes doivent également posséder ce qu'on peut appeler une caractéristique résultante qui est l'assurance de conflit cognitif.

En effet, il faut dans un sous-groupe équilibré, qu'il y ait des conflits pour déstructurer les sujets d'apprentissage avant de les reconstruire pour que tous les individus du sous-groupe les assimilent au mieux.

### L'algorithme de répartition

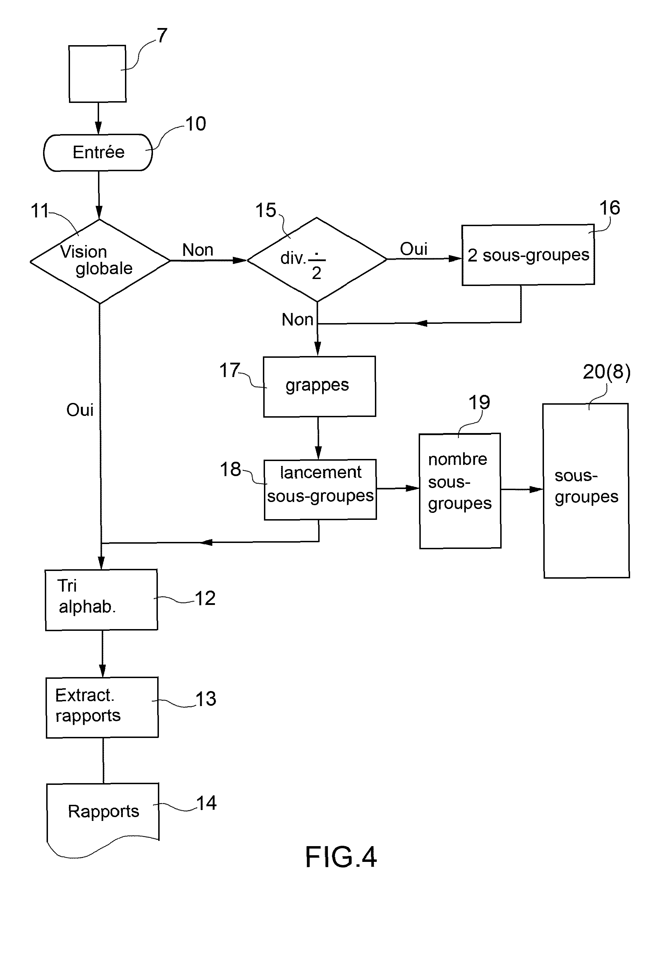

On a représenté, sur la figure 4, l'organigramme de l'algorithme 6.

En entrée 10, l'algorithme reçoit les profils d'apprenance 7 des « apprenants », c'est-à-dire des individus du groupe à répartir en sous-groupes.

L'algorithme propose alors, à l'étape 11, une vision globale. En cas d'affirmation, à l'étape 12, on détermine les sous-groupes par ordre alphabétique, avant d'extraire, à l'étape 13, des rapports 14 d'informations d'apprenance de bas niveau d'ordre pédagogique pour la gestion du groupe.

En cas de négation quant à la vision globale, à l'étape 15 suivant aussi l'étape 11, on offre de diviser le groupe en deux sous-groupes d'individus acceptant la technologie pour apprendre (première « dimension » visée ci-dessus) et d'individus la rejetant. Si la division est acceptée, on obtient les deux sous-groupes à l'étape 16. Si cette division en deux est refusée à l'étape 15, à l'étape 17, également située directement en aval de l'étape 16, il est procédé à la création multifactorielle de quelques grappes (en l'espèce et ici quatre) sur la base de quelques construits et variantes de ceux-ci.

À l'étape 18, la création des sous-groupes 8 est lancée avec, d'abord, la détermination 19 de leur nombre en fonction de l'effectif moyen désiré et entré sur la plate-forme 1 par le terminal 2. Suite à cela, à l'étape 20, on répartit de manière égale tous les apprenants d'une même grappe de l'étape 17 dans tous les sous-groupes de l'étape précédente 19. On procède ainsi grappe après grappe.

Grâce à l'invention, on obtient des sous-groupes équilibrés, avec des profils mélangés pour permettre à chacun une expérience d'apprentissage optimale. La mobilité et les compétences individuelles sont mieux gérées. Les formations des individus sont mieux adaptées.

Bien entendu, l'invention concerne également un programme d'ordinateur chargeable sur un ordinateur comportant des moyens de programmation lisibles par l'ordinateur et conçus pour mettre en oeuvre les étapes du procédé, de répartition des individus du groupe à former, de l'invention, lesdits moyens de programmation comportant l'algorithme de répartition présenté ci-dessus.

## Revendications

1. Équipement pour l'apprentissage d'un groupe d'individus agencé, pour, préalablement à l'apprentissage, répartir les individus du groupe en sous-groupes d'individus à former, comportant :
- une plate-forme (1) permettant la détermination des profils (7) des individus destinés à passer l'évaluation individuelle de leur diagnostic d'apprenance ;
- un terminal informatique (2) d'entrée de données caractéristiques des sous-groupes ;
- un moteur d'apprenance (3) comportant un algorithme (6) de répartition des individus du groupe, pour fournir en sortie du moteur (3) les sous-groupes (8) à former et les profils (7) des individus ;
- des terminaux (4) d'entrée et d'échange de données pour les individus du groupe, pour l'établissement de leur profil (7) ;
- le terminal de sous-groupes (2) et les terminaux d'individus (4) étant connectés à des entrées de la plate-forme (1) ;
- des moyens d'accès au réseau Internet (5), à travers lequel les connexions des terminaux (2, 4) et de la plate-forme (1) s'effectuent.

2. Équipement selon la revendication 1, dans lequel la connexion entre la plate-forme (1) et le terminal de sous-groupes (2) est unidirectionnelle vers la plate-forme (1).

3. Équipement selon l'une des revendications 1 et 2, dans lequel le moteur d'apprenance (3) est aussi agencé pour la détermination des profils (7).

4. Équipement selon la revendication 3, dans lequel le moteur d'apprenance (3) est intégré à la plate-forme (1) et génère au sein de la plate-forme (1) les profils (7) qui sont traités par l'algorithme (6), qui génère en sortie les sous-groupes (8), les terminaux d'individus (4) et les terminaux de sous-groupes (2) étant en liaison avec le moteur d'apprenance (3).

5. Équipement selon la revendication 4, dans lequel le terminal de sous-groupes (2) est agencé pour appliquer ses données directement à l'algorithme (6).

6. Équipement selon l'une des revendications 1 et 5, dans lequel l'algorithme (6) est agencé pour opérer une suite de triages à partir des profils (7) et d'au moins un des facteurs d'une échelle psychométrique ayant servi à établir les profils (7).

7. Équipement selon la revendication 6, dans lequel il est procédé à un triage à partir de certaines des composantes de ladite dimension.

8. Procédé pour l'apprentissage d'un groupe d'individus afin de, préalablement à l'apprentissage, répartir les individus du groupe en sous-groupes d'individus à former, selon lequel :
- on saisit sur une plate-forme des données caractéristiques des sous-groupes ;
- les individus du groupe saisissent sur la plate-forme des données et en échangent d'autres avec elle, pour l'établissement de leurs profils ;
- on détermine les profils des individus ;
- on répartit les individus du groupe en sous-groupes à former en fonction de leurs profils.

9. Procédé selon la revendication 8, selon lequel la saisie des données caractéristiques des sous-groupes s'effectue après la détermination des profils des individus.

10. Procédé selon l'une des revendications 8 et 9, selon lequel on détermine les profils à l'aide d'une échelle psychométrique et, pour répartir les individus en sous-groupes, on procède par triage à partir des profils et d'au moins une des dimensions de l'échelle psychométrique.

11. Procédé selon la revendication 10, selon lequel les profils sont soumis à un triage à partir de certaines des composantes de ladite dimension.

12. Procédé selon l'une des revendications 8 à 11, selon lequel on trie les individus du groupe par vision globale et par ordre alphabétique et on extrait des rapports d'informations d'apprenance de bas niveau.

13. Procédé selon l'une des revendications 8 à 11, selon lequel on divise le groupe d'individus en deux sous-groupes d'individus, l'un acceptant la technologie pour apprendre et l'autre la rejetant.

14. Procédé selon l'une des revendications 8 à 11 et 13, selon lequel on crée de façon multifactorielle des grappes d'individus sur la base de composantes de dimensions de l'échelle psychométrique.

15. Procédé selon la revendication 14, selon lequel on lance la création des sous-groupes après la création des grappes en définissant leur nombre et en répartissant les individus d'une même grappe de manière égale dans tous les sous-groupes, la répartition s'effectuant grappe après grappe.

16. Programme d'ordinateur chargeable sur un ordinateur comportant des moyens de programmation lisibles par l'ordinateur et conçus pour mettre en oeuvre les étapes du procédé, de répartition des individus du groupe à former, de l'une des revendications 8 à 15 lorsque le programme est exécuté sur l'ordinateur.

17. Programme d'ordinateur selon la revendication 16, dans lequel lesdits moyens de programmation comportent un algorithme de répartition des individus en fonction de leurs profils.
